Europäisches Patentamt

European Patent Office

Office européen des brevets

(19)

(11) Numéro de publication: **0 057 119**
**B1**

(12) **FASCICULE DE BREVET EUROPEEN**

(45) Date de publication du fascicule du brevet:
**27.06.84**

(51) Int. Cl.³: **B 01 D 19/00**, B 04 C 3/06

(21) Numéro de dépôt: **82400036.8**

(22) Date de dépôt: **11.01.82**

(54) **Dispositif de traitement d'un fluide en vue d'en extraire une phase gazeuse.**

(30) Priorité: **12.01.81 FR 8100363**

(43) Date de publication de la demande:
**04.08.82 Bulletin 82/31**

(45) Mention de la délivrance du brevet:
**27.06.84 Bulletin 84/26**

(84) Etats contractants désignés:
**DE FR GB IT**

(56) Documents cités:
**DE - A - 1 503 601**
**DE - B - 1 049 363**
**DE - C - 641 664**
**FR - A - 1 504 809**
**US - A - 2 705 053**
**US - A - 3 406 497**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Charleux, Louis, La Faiolle Montaud, F-38210 Tullins (FR)**
Inventeur: **Prost, Roger, Domaine Saint Hugues, F-38120 Saint Egreve (FR)**
Inventeur: **Rivol, Georges, 23, bd Maréchal Leclerc, F-38000 Grenoble (FR)**

(74) Mandataire: **Leclercq, Maurice et al, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 07 (FR)**

## Description

L'invention concerne les dispositifs qui permettent de séparer par effet centrifuge une phase liquide et une phase gazeuse à partir d'un mélange biphasique produit par la détente d'un fluide. Cependant, elle s'intéresse plus particulièrement aux techniques de séparation de telles phases qui conviennent à une mise en oeuvre en milieu d'apesanteur. L'invention a plus précisément pour objet un dispositif de traitement d'un fluide en vue d'en extraire une phase gazeuse par effet centrifuge, du type comportant une chambre de détente de forme cylindrique pourvue d'un conduit d'extraction d'une phase gazeuse hors d'une partie centrale de la chambre, des moyens d'injection du fluide qui débouchent, à travers une face d'extrémité de la chambre, dans une zone annulaire intermédiaire entre l'axe de la chambre et sa périphérie, à cette périphérie au moins un orifice de sortie d'une phase liquide séparée et comprimée par effet centrifuge dans la chambre, et des moyens auxiliaires d'accélération du fluide injecté.

Dans les matériels et produits emportés dans l'espace, pour être utilisés dans les fusées ou sur les satellites par exemple, on a fréquemment besoin de recréer par des moyens différents l'interface entre phase liquide et phase gazeuse qui, sur terre, se forme naturellement sous l'action du champ de gravitation. Cette nécessité existe notamment chaque fois que l'on souhaite pouvoir prélever dans un réservoir de fluide, uniquement le fluide à l'état liquide ou uniquement la vapeur, ou uniquement l'une des phases d'un mélange biphasique liquide-gaz, alors qu'en milieu spatial il n'y a pas de forces de pesanteur capables de l'emporter sur les forces de tension superficielles et il n'existe pas d'état stable de l'interface liquide/gaz. Il est usuel en particulier de chercher à mettre à l'atmosphère les réservoirs contenant des liquides cryogéniques par un conduit qui débouche en un endroit du réservoir exclusivement occupé par de la phase gazeuse, afin d'éviter toute perte de liquide.

On a déjà envisagé de nombreuses solutions pour réaliser la séparation de phases gazeuse et liquide en milieu d'apesanteur. Aucune toutefois ne donne entièrement satisfaction. Dans certains cas, on crée un champ de forces par des moyens mécaniques qui entraînent le fluide dans un mouvement de rotation ou de translation. Les dispositifs utilisés ont l'inconvénient de comporter des pièces mécaniques en déplacement qui exigent une consommation d'énergie et dont le fonctionnement est difficile à contrôler avec précision. De plus, ils ne se prêtent guère au traitement d'un fluide qui est susceptible d'être constitué en pratique de liquide exclusivement, comme il advient souvent dans l'application à la mise à l'atmosphère de réservoirs de liquide cryogénique. Dans d'autres cas, on assure un échange de chaleur entre deux courants de fluide, dont l'un est soumis préalablement à une détente, l'autre étant soit entraîné par une pompe soit directement constitué par le fluide du réservoir, que l'on refroidit à travers les parois de ce dernier. Le traitement convient alors aussi bien à des mélanges biphasiques qu'à des fluides essentiellement à l'état liquide, mais l'on rencontre de graves problèmes de construction dans la réalisation des échangeurs thermiques, qui doivent être intégrés dans des réservoirs conçus spécialement à cet effet. On a aussi prévu d'exploiter les propriétés de tension de surface pour piéger le liquide par capillarité dans des tubes microporeux. On n'a pas pu éviter dans ce cas d'avoir à apporter de l'énergie extérieure à une pompe de reprise du liquide, et d'autre part les dispositifs nécessaires sont lourds et encombrants lorsque la quantité de fluide à traiter est importante. Enfin, on a pensé assurer la séparation des phases par des champs de forces de type électrique ou magnétique. L'emploi d'un courant à haute tension pose dans ce cas aussi des problèmes délicats de construction, et comme dans les cas précédents, le fonctionnement est encore tributaire d'un apport d'énergie extérieure qui est loin d'être négligeable.

La présente invention permet de s'affranchir des inconvénients de ces solutions antérieurement connues. Elle permet de réaliser la séparation des phases gazeuse et liquide au moyen d'un dispositif de faible masse, peu encombrant et facile à mettre en place dans les réservoirs de liquide pour véhicules spatiaux, sans construction particulière de ces derniers. Et, au moins lorsque les conditions sont favorables, elle permet un fonctionnement sans apport énergétique extérieur. Enfin le dispositif qu'elle propose a l'avantage de pouvoir s'adapter facilement au traitement de toutes sortes de fluides, quelles que soient les conditions de fonctionnement parmi celles que l'on rencontre habituellement dans les applications spatiales.

Dans ce but, l'invention repose essentiellement sur la formation d'un vortex et sur l'utilisation des forces centrifuges auxquelles est soumis le fluide entraîné en rotation dans ce vortes pour assurer la séparation entre la phase liquide et la phase gazeuse. Elle repose en outre sur une utilisation optimale, dans des conditions d'apesanteur, de l'énergie fournie par la détente du fluide lors de son injection dans le vortex, cette énergie servant à assurer la séparation des phases liquide et gazeuse et la recompression de la phase liquide jusqu'à une pression suffisante pour permettre le cas échéant sa réinjection dans le réservoir d'où le fluide a été prélevé. Ce principe, qui se distingue des autres emplois que l'on a pu faire des vortex, dans des appareils du genre des séparateurs cyclones, dans lesquels les effets centrifuges ne sont jamais qu'une aide dans un processus de séparation qui a lieu essentiellement sous l'action des phénomènes de gravité, a déjà été proposé par le brever US-A-3 406 497, qui décrit un dispositif du type mentionné plus haut.

Cependant, des difficultés se rencontrent, en pratique, pour obtenir à la sortie de la chambre le liquide sous une pression suffisante, du fait du frottement les uns sur les autres des anneaux élémentaires de liquide, qui tournent à des vitesses linéaires différentes, et du frottement de ces anneaux sur les parois de la chambre. Le brevet US précité propose d'empêcher la formation d'une couche limite stationnaire contre les faces d'extrémité de la chambre au moyen d'une injection ou d'une évacuation de liquide à cet endroit.

Le problème technique que l'invention se propose de résoudre consiste à augmenter positivement la vitesse de rotation du liquide et, partant, à accroître la pression de sortie de ce liquide.

A cet effet, l'invention a pour objet un dispositif du type précité, caractérisé en ce que les moyens auxiliaires d'accélération du fluide injecté comportent une roue à aubes montée librement rotative en position excentrée dans la chambre, et en ce que les moyens d'injection du fluide comprennent un conduit qui débouche dans une zone comprise entre la zone où la roue est rapprochée de la paroi périphérique de la chambre et celle où la roue en est éloignée.

Le dispositif selon l'invention peut être utilisé avec avantage dans de nombreuses applications impliquant une séparation entre phase liquide et phase gazeuse, et spécialement dans les applications du domaine spatial où cette séparation doit s'effectuer en milieu d'apesanteur. Le fluide traité peut être un mélange biphasique liquide-gaz duquel on cherche à éliminer la phase gazeuse, malgré l'absence d'une surface de séparation gaz-liquide en régime d'apesanteur, ou un mélange biphasique dont on cherche au contraire à éliminer la phase liquide pour utiliser la phase gazeuse uniquement dans la propulsion. Mais le dispositif selon l'invention a aussi parmi ses avantages celui de permettre le traitement d'un fluide se trouvant essentiellement, ou même entièrement, à l'état liquide, la phase gazeuse étant alors produite dans la chambre du dispositif, par la détente du liquide à l'injection.

Ainsi, l'une des applications préférées de l'invention concerne la mise à l'atmosphère de réservoirs de liquides en milieu d'apesanteur, tels que les réservoirs de liquides cryogéniques devant être emportés dans les véhicules spatiaux. On peut alors contrôler la pression dans ce genre de réservoirs sans aucune perte de liquide, en utilisant un dispositif selon l'invention, immergé dans le réservoir, de manière à prélever dans la masse de liquide le fluide admis à l'injection et à renvoyer dans cette même masse la phase liquide sortant à la périphérie de la chambre, le conduit d'extraction de phase gazeuse débouchant à l'extérieur du réservoir.

On peut envisager la mise en oeuvre de l'invention avec des différences de pressions très variables entre le fluide traité ou la masse de liquide dans laquelle il est prélevé et d'autre part la phase gazeuse évacuée de la chambre, par exemple comprises entre 0,1 et 20 bars, encore que l'on préfère des différences de pressions restant dans le domaine de 0,2 à 5 bars.

D'autres caractéristiques et avantages de l'invention ressortiront mieux de la description que l'on donnera maintenant d'un mode de réalisation préféré, choisi à titre d'exemple non limitatif, et illustré par les fig. 1 à 3 des dessins annexés, dans lesquels:

— la fig. 1 montre schématiquement un réservoir de liquide cryogénique équipé d'un dispositif séparateur de phases selon l'invention;
— la fig. 2 représente, selon une vue en coupe longitudinale partielle, un dispositif selon l'invention dans le mode de réalisation correspondant à celui de la fig. 1; et
— la fig. 3 représente schématiquement, en vue de dessus et coupe schématique partielle, le dispositif déjà illustré par la fig. 2.

Dans le mode de réalisation choisi à titre d'exemple, le dispositif selon l'invention est destiné à constituer un séparateur de phases dans un réservoir de liquides cryogéniques utilisé en milieu spatial, pour permettre d'assurer la mise à l'atmosphère de ce réservoir en l'absence de tout champ de pesanteur.

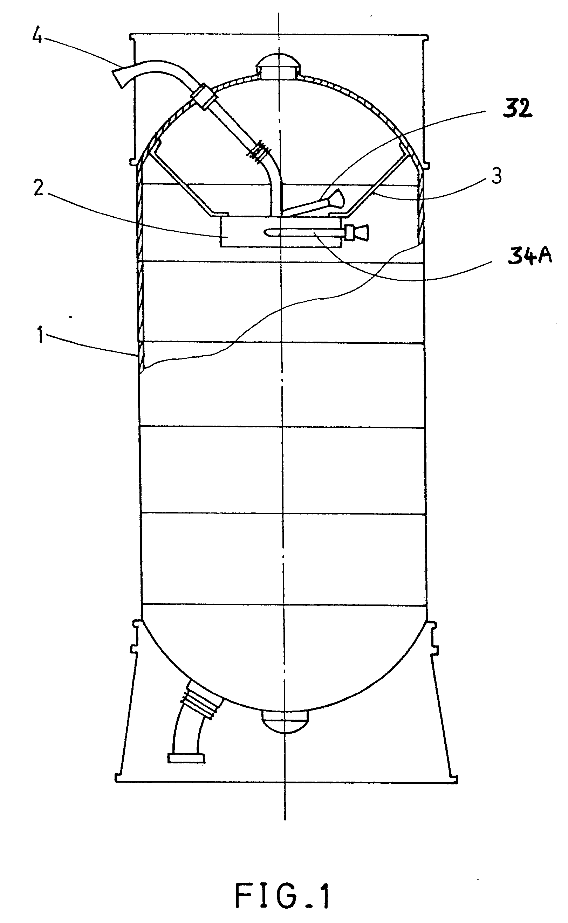

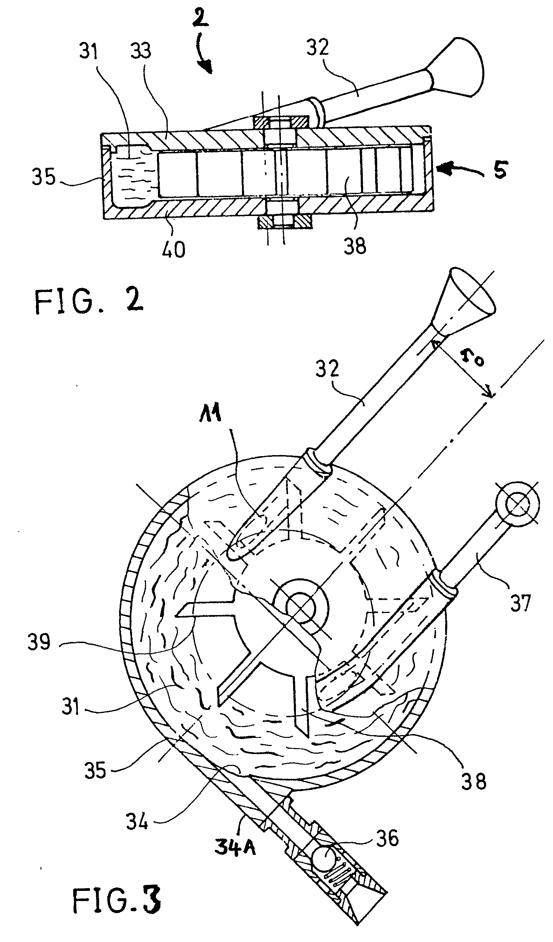

Sur la fig. 1 on a représenté un tel réservoir, qui est supposé contenir un fluide cryogénique pratiquement en totalité à l'état liquide. En fait ce liquide peut éventuellement contenir une faible proportion de phase gazeuse, mais en milieu d'apesanteur cette dernière reste répartie sous forme diffuse dans l'ensemble de la masse liquide. Le séparateur de phases 2 est immergé dans cette masse liquide où il est monté à l'intérieur du réservoir 1 par l'intermédiaire d'un dispositif de fixation quelconque 3. Il communique avec l'extérieur à travers les parois du réservoir, par la seule conduite de mise à l'atmosphère 4. Naturellement l'orientation qui a été choisie pour la position verticale sur la fig. 1 n'a en pratique aucune incidence sur le fonctionnement en milieu d'apesanteur. Le séparateur 2 est constitué comme il apparaît d'une manière plus précise sur les fig. 2 et 3. Il comprend un boîtier 5 qui délimite une chambre interne 31 de forme cylindrique. La chambre 31 communique avec l'extérieur par trois voies. Deux d'entre elles s'ouvrent à l'extérieur dans la masse de liquide où le dispositif est immergé: un conduit 32 d'admission du fluide à traiter et un conduit 34A pour la réinjection de la phase liquide séparée. La troisième est matérialisée par un tube 37 qui est raccordé à la conduite 4 de mise à l'atmosphère. Le conduit 32 est monté en biais sur la face supérieure 33, circulaire et plane, du boîtier 5, et il forme intérieurement une tuyère 11 qui débouche par le dessus dans la chambre 31, dans une zone de cette chambre intermédiaire entre le centre et la périphérie, à une distance de l'axe que l'on a fait apparaître sur la fig. 3 sous le symbole $r_0$. De plus la tuyère est orientée tangentiellement au cercle

de rayon $r_0$ au point d'injection. En fonctionnement, le fluide à traiter est prélevé de la masse liquide du réservoir par le conduit 32 et injecté par la tuyère 11 dans la chambre 31. Il subit de ce fait une détente avec vaporisation partielle. L'admission tangentielle au cercle de rayon $r_0$ provoque sa mise en rotation dans la chambre 31, avec une vitesse qui dépend de la construction de la tuyère et de la différence entre les pressions avant et après la détente à l'injection. En raison de cette rotation, le mélange biphasique résultant de la détente est soumis à des forces centrifuges qui ont pour effet de séparer la phase liquide de la phase gazeuse, en rejetant la phase liquide vers la paroi périphérique 35 de la chambre, tandis que la phase gazeuse se rassemble dans la partie centrale. La phase gazeuse est évacuée de la partie centrale de la chambre 31 par le tube 37. Ce dernier est déporté par rapport à l'axe du séparateur et s'ouvre à son extrémité à l'intérieur de la chambre. La phase liquide sort d'autre part de la chambre à sa périphérie par un orifice 34 percé dans la paroi 35. La chambre 31 communique par là avec le conduit 34A, qui s'en éloigne tangentiellement dans le sens de circulation imposé par l'injection du fluide. La phase liquide retourne par le conduit 34A dans la masse du réservoir. Le conduit 34A est muni d'un clapet 36 qui empêche que la circulation puisse avoir lieu en sens inverse lors du démarrage du fonctionnement.

Pour augmenter la vitesse de rotation dans le séparateur, on utilise une roue tournante. En effet, à l'intérieur de la chambre se trouve, en position excentrée, une roue 38 à ailettes 39, montée rotative sur son axe entre les faces 33 et 40.

En fonctionnement, la roue 38 est entraînée par l'effet de détente produit entre la zone où le pourtour de la roue 38 est rapproché de da paroi 35 et celle où il en est éloigné. La roue entraîne alors elle-même le liquide et augmente sur lui l'effet centrifuge et l'augmentation de charge de l'interface gaz-liquide à la périphérie de la chambre.

La conception du séparateur de phases permet, en fonctionnement, de prélever sur l'énergie libérée par la détente du fluide celle qui est utilisée pour imprimer la vitesse de rotation au mélange biphasique obtenu après détente mais aussi pour recomprimer la fraction séparée à l'état liquide jusqu'à une pression de sortie de la phase liquide qui soit au moins égale à celle du fluide dans le réservoir. Ceci est obtenu grâce au gradient de pression apparaissant dans l'épaisseur de liquide en rotation autour de la chambre, en laissant la place pour une épaisseur de liquide suffisante à partir de la zone d'injection du fluide (sortie de la tuyère 11) et en assurant une vitesse de rotation suffisante. Dans un séparateur tel que celui qui vient d'être décrit la vitesse de rotation est imposée par la construction de la tuyère pour une chute de pression déterminée de la pression P du réservoir à la pression p de la phase gazeuse mise à l'atmosphère.

Une caractéristique supplémentaire du dispositif selon l'invention peut consister à prévoir en outre des moyens pour injecter dans le séparateur un gaz non condensable admis sous une pression supérieure à celle du réservoir, depuis l'extérieur de celui-ci, de manière à augmenter encore la vitesse de rotation du liquide dans le séparateur, en même temps que l'on augmente la proportion de la phase gazeuse. On peut utiliser à cet effet un tube situé dans l'axe du conduit 32, pour l'injection du gaz non condensable. A titre d'exemple, on peut l'utiliser pour injecter de l'hélium à la vitesse du son. Un faible débit de ce gaz non condensable, de l'ordre de par exemple 1 à 5% en masse du débit gazeux évacué par le séparateur, peut être utile pour compenser les pertes d'énergie qui peuvent avoir lieu notamment par frottement dans le séparateur, et la recondensation partielle éventuelle de la vapeur de la phase gazeuse.

**Revendications**

1. Dispositif de traitement d'un fluide en vue d'en extraire une phase gazeuse par effet centrifuge, du type comportant une chambre de détente (31) de forme cylindrique pourvue d'un conduit (37) d'extraction d'une phase gazeuse hors d'une partie centrale de la chambre, des moyens (32) d'injection du fluide qui débouchent, à travers une face d'extrémité (33) de la chambre, dans une zone annulaire intermédiaire entre l'axe de la chambre et sa périphérie, à cette périphérie au moins un orifice (34) de sortie d'une phase liquide séparée et comprimée par effet centrifuge dans la chambre, et des moyens auxiliaires (38) d'accélération du fluide injecté, caractérisé en ce que lesdits moyens auxiliaires comportent une roue (38) à aubes montée librement rotative en position excentrée dans la chambre (31), et en ce que lesdits moyens d'injection (32) comprennent un conduit qui débouche dans une zone comprise entre la zone où la roue est rapprochée de la paroi périphérique (35) de la chambre et celle où la roue en est éloignée.

2. Dispositif selon la revendication 1, caractérisé en ce que lesdits moyens auxiliaires comprennent en outre des moyens d'injection d'un gaz non condensable dans ledit conduit d'injection (32).

**Patentansprüche**

1. Vorrichtung zur Entgasung eines Fließmittels durch Schleudern mit einer Entspannungskammer (31) zylindrischer Form, die mit einer Entgasungsleitung (37) außerhalb eines zentralen Teils der Kammer versehen ist, mit Einspritzmitteln (32) für das Fließmaterial, die durch eine Endseite (33) der Kammer in einer Ringzone zwischen der Kammerachse und ihrem Umfang münden, wobei an diesem Umfang mindestens eine Ausgangsöffnung (34) einer getrennten flüssigen Phase, die in der Kammer durch Schleudern verdichtet ist, angeordnet ist, und mit Hilfsmitteln (38) für die Beschleunigung des eingespritzten Fließmittels, dadurch gekennzeichnet, daß diese Hilfsmittel ein Schaufelrad (38) aufweisen, das in der Kammer (31) exzentrisch frei drehend angeordnet ist und daß die Einspritzmittel (32) eine Leitung aufweisen, die in einer Zone zwischen derjenigen Zone mündet, wo das Rad der Umfangswandung (35) der Kammer genähert ist, und der, wo das Rad weiter von dort entfernt ist.

2. Vorrichtung nach Anspruch 1, dadurch gekennzeichnet, daß die Hilfsmittel ferner Einspritzmittel für ein in der Einspritzleitung (32) nicht kondensierbares Gas aufweisen.

## Claims

1. Apparatus for the degasification of a fluid by means of centrifuging, comprising a detent chamber (31) in the shape of a cylinder provided with a conduit (37) for extracting a gaseous phase from a central part of the chamber, injection means (32) for the fluid terminating through an end face (33) of the chamber into an annular zone between the axis of the chamber and its periphery, at least an exit orifice (34) at this periphery for a liquid phase separated and compressed by means of centrifuging in the chamber, and auxiliar acceleration means (38) for the injected fluid, characterized in that the said auxiliar means comprise an impeller (38) mounted freely rotatable in a position excentrically within the chamber (31), and that the said injection means (32) comprise a conduit which terminates in a zone positioned between the zone, where the impeller is near the peripheral wall (35) of the chamber, and that, where the impeller is farer away.

2. Apparatus according to claim 1, characterized in that the said auxiliar means comprise furthermore injection means for a non-condensable gas within the said injection conduit (32).

FIG.1

FIG. 2

FIG.3